# FASCICULE DE BREVET EUROPEEN

(11) **EP 4 128 909 B1**
(45) Date de publication et mention de la délivrance du brevet: **30.07.2025**
(21) Numéro de dépôt: 21711251.5
(22) Date de dépôt: 15.03.2021
(51) Int. Cl.: H04W 56/00, H04L 7/04, H04B 7/26

(54) **PROCÉDÉ DE COMMUNICATION SELON UN PROTOCOLE TDMA ENTRE UN DISPOSITIF MAÎTRE ET AU MOINS UN DISPOSITIF ESCLAVE**
KOMMUNIKATIONSVERFAHREN NACH EINEM TDMA-PROTOKOLL ZWISCHEN EINEM MASTER-GERÄT UND MINDESTENS EINEM SLAVE-GERÄT
METHOD FOR COMMUNICATION ACCORDING TO A TDMA PROTOCOL, BETWEEN A MASTER DEVICE AND AT LEAST ONE SLAVE DEVICE

(30) Priorité: 26.03.2020 FR 2002943
(43) Date de publication de la demande: 08.02.2023
(73) Titulaire: SAFRAN, 75015 Paris (FR)
(72) Inventeur: THOMAS, Patrick, 77550 Moissy-Cramayel (FR); GHODHBANE, Raouia, 77550 Moissy-Cramayel (FR)
(74) Mandataire: Argyma
(86) Numéro de dépôt international: PCT/EP2021/056456
(87) Numéro de publication internationale: WO 2021/190963

(56) Documents cités:
- EP-A1- 3 273 620
- EP-A1- 3 444 975
- WO-A1-2014/091592
- WO-A2-02/065707
- US-A1- 2008 056 419

## Description

### Domaine technique

La présente invention concerne le domaine de la synchronisation entre un dispositif maître et au moins un dispositif esclave qui communiquent selon un protocole TDMA (accès multiple par répartition dans le temps).

De manière connue, selon le protocole TDMA, des trames sont transmises entre un dispositif maître et des dispositifs esclave. Chaque trame est partitionnée en intervalles de temps destinés à la communication du dispositif maître ou des dispositifs esclave prédéterminés. Le dispositif maître comporte une horloge maître qui cadence l'émission des données. De manière analogue, chaque dispositif esclave comporte une horloge esclave qui cadence la réception des données.

Afin de permettre une réception des données dans les meilleures conditions, les horloges du dispositif maître et du dispositif esclave doivent être parfaitement synchronisées. En pratique, un intervalle de temps d'une trame comporte une forme d'onde analogique modulée par un signal numérique. De manière connue, les horloges sont synchronisées numériquement par une référence d'horloge programmée (PCR) défini par le signal numérique. La synchronisation des horloges dépend de la transmission des références d'horloge programmée (PCR).

En pratique, une erreur sur la fréquence de l'horloge esclave (dérive, etc.) est détectée en comparant l'horodatage fourni par la référence d'horloge programmée (PCR) et la valeur d'un compteur de temps du dispositif esclave. Suite à la détection, il est possible de corriger la fréquence de l'horloge esclave. Une telle méthode de synchronisation présente plusieurs inconvénients.

Tout d'abord, l'horodatage des paquets d'une trame est peu précis, ce qui affecte la qualité de la synchronisation. Il existe un besoin pour obtenir une précision de l'ordre de la microseconde. De plus, les solutions de synchronisation basées sur la corrélation de signaux numériques affectent le débit étant donné qu'il est nécessaire de prévoir de l'espace dédié dans chaque trame pour les ondes analogiques modulées par un signal numérique.

En outre, pour extraire l'horloge maître, le dispositif esclave doit comprendre un circuit d'extraction qui comprend une chaine de traitement numérique qui doit être maintenue en permanence en fonctionnement. Autrement dit, d'un point de vue énergétique, la chaine de traitement numérique est très consommatrice en courant électrique, ce qui présente un inconvénient pour un dispositif esclave embarqué qui ne dispose pas de batterie électrique de grande capacité.

Des procédés selon l'art antérieur sont par exemple connus par les documents EP3444975A1 et WO2014/091 592A

L'invention vise ainsi à éliminer au moins certains de ces inconvénients en proposant un nouveau procédé de communication selon le protocole TDMA.

### PRESENTATION DE L'INVENTION

L'invention concerne un procédé de communication selon un protocole TDMA entre un dispositif maître et au moins un dispositif esclave au cours duquel une pluralité de trames sont transmises entre le dispositif maître et le dispositif esclave, chaque trame étant partitionnée en une pluralité d'intervalles de temps, au moins un intervalle de temps comprenant un signal analogique de synchronisation, émis par le dispositif maître vers le dispositif esclave, comprenant une portion de réglage d'amplitude qui se présente sous la forme d'une onde sinusoïdale ayant une amplitude constante pendant un nombre d'impulsions prédéterminés, et une portion de synchronisation optimisée qui se présente sous la forme d'une modulation d'amplitude de forme triangulaire de l'onde sinusoïdale de manière à déterminer un instant de référence.

De manière avantageuse, cela permet de régler le gain du dispositif esclave par analyse de la portion de réglage d'amplitude qui comporte plusieurs impulsions d'amplitude constante et qui forment ainsi des amplitudes de référence. En outre, une modulation d'amplitude de forme triangulaire permet de définir une forme caractéristique avec une phase croissante et une phase décroissante qui peuvent être aisément détectées par analyse des signaux. La détermination d'un instant de référence, notamment à la transition entre les deux phases, permet d'obtenir une précision très importante. On peut ainsi synchroniser l'horloge du dispositif maître de manière précise avec l'horloge du dispositif esclave. Enfin, les portions du signal analogique de synchronisation sont formées à partir de la même onde sinusoïdale, ce qui limite les moyens techniques nécessaires pour former un tel signal analogique de synchronisation.

De manière préférée, la modulation d'amplitude de forme triangulaire de l'onde sinusoïdale comporte une phase d'amplitude croissante et une phase d'amplitude décroissante, l'instant de référence étant déterminé à la transition entre la phase d'amplitude croissante et la phase d'amplitude décroissante.

De préférence, la modulation d'amplitude de forme triangulaire de l'onde sinusoïdale comporte un nombre impair d'impulsions, l'instant de référence étant déterminé au cours d'une impulsion centrale.

De préférence, l'onde sinusoïdale est pure. Cela permet de mesurer sa fréquence de manière très précise.

Selon un aspect préféré, l'onde sinusoïdale possède une période comprise entre 0,1 et 10 microsecondes, de préférence, de l'ordre d'une microseconde. Cela permet d'obtenir une précision importante.

De manière préférée, la portion de réglage d'amplitude possède un nombre d'impulsions supérieur à 16 et, de préférence, inférieur à 40. Un tel nombre d'impulsions permet d'assurer un compromis entre vitesse et précision lors du réglage du gain.

De manière préférée, la portion de synchronisation optimisée possède un nombre d'impulsions à 3 et, de préférence, inférieur à 7, de préférence égal à 5. Un tel nombre d'impulsions permet d'assurer une détection optimale sur une période courte.

L'invention concerne également un module d'émission de données d'un dispositif maître à au moins un dispositif esclave dans une trame selon un protocole TDMA, chaque trame étant partitionnée en une pluralité d'intervalles de temps, au moins un intervalle de temps comprenant un signal analogique de synchronisation, le signal analogique de synchronisation comprenant une portion de réglage d'amplitude qui se présente sous la forme d'une onde sinusoïdale ayant une amplitude constante pendant un nombre d'impulsions prédéterminés, et une portion de synchronisation optimisée qui se présente sous la forme d'une modulation d'amplitude de forme triangulaire de l'onde sinusoïdale de manière à déterminer un instant de référence, le module d'émission comprenant un générateur de signal maître, un générateur de signal analogique de synchronisation et une horloge maître, reliée aux deux générateurs, qui contrôle la cadence de génération du signal maître et du signal analogique de synchronisation.

De préférence, le générateur de signal analogique de synchronisation comporte un organe de génération d'impulsions et un organe de traitement desdites impulsions pour former les différentes portions du signal analogique de synchronisation, l'organe de traitement comportant un montage additionneur pondéré de manière à réaliser une modulation en amplitude de forme triangulaire de la portion de synchronisation optimisée.

L'invention concerne également un module de réception de données, émises par un dispositif maître à au moins un dispositif esclave, dans une trame selon un protocole TDMA, chaque trame étant partitionnée en une pluralité d'intervalles de temps, au moins un intervalle de temps comprenant un signal analogique de synchronisation, le signal analogique de synchronisation comprenant une portion de réglage d'amplitude qui se présente sous la forme d'une onde sinusoïdale ayant une amplitude constante pendant un nombre d'impulsions prédéterminés, et une portion de synchronisation optimisée qui se présente sous la forme d'une modulation d'amplitude de forme triangulaire de l'onde sinusoïdale de manière à déterminer un instant de référence, le module de réception comprenant un système d'extraction des instant de référence et un système de réglage d'une horloge esclave à partir desdits instants de référence.

De préférence, le système d'extraction comporte un amplificateur à gain programmable et des comparateurs de tensions configurés pour déterminer de manière précise l'amplitude du signal analogique de synchronisation et en déduire un réglage de l'amplificateur à gain programmable.

L'invention concerne également un ensemble d'un module d'émission tel que présenté précédemment et d'un module de réception tel que présenté précédemment pour émettre et recevoir des trames.

### PRESENTATION DES FIGURES

L'invention sera mieux comprise à la lecture de la description qui va suivre, donnée uniquement à titre d'exemple, et se référant aux figures annexées données à titre d'exemples non limitatifs, dans lesquels des références identiques sont données à des objets semblables.
[Fig.1] La [Fig.1] est une représentation schématique d'un dispositif maître communiquant avec une pluralité de dispositifs de type esclave selon une forme de réalisation de l'invention.
[Fig.2] La [Fig.2] est une représentation schématique d'une trame émise sur le réseau.
[Fig.3] La [Fig.3] est une représentation schématique d'un signal analogique de synchronisation d'une trame de la [Fig.2].
[Fig.4] La [Fig.4] est une représentation schématique d'une transmission des signaux M et S entre un module d'émission d'un dispositif maître et un module de réception d'un dispositif esclave.
[Fig.5] La [Fig.5] est une représentation schématique de la structure d'un module d'émission.
[Fig.6] La [Fig.6] est une représentation schématique de la structure d'un organe de traitement du module d'émission de la [Fig.5].
[Fig.7] La [Fig.7] est une représentation schématique des sorties numériques et de leur traitement de manière à former une portion de réglage d'amplitude et une portion de synchronisation optimisée d'un signal analogique de synchronisation.
[Fig.8] La [Fig.8] est une représentation schématique de la structure d'un module de réception.
[Fig.9] La [Fig.9] est une représentation schématique d'un système d'extraction des instants de référence du module de réception de la [Fig.8].
[Fig.10] La [Fig.10] est une représentation schématique de la détermination d'un instant de référence grâce aux comparateurs de tension du système d'extraction de la [Fig.9].
[Fig.11] La [Fig.11] est une représentation schématique d'un système de génération d'horloge esclave du module de réception de la [Fig.8].

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

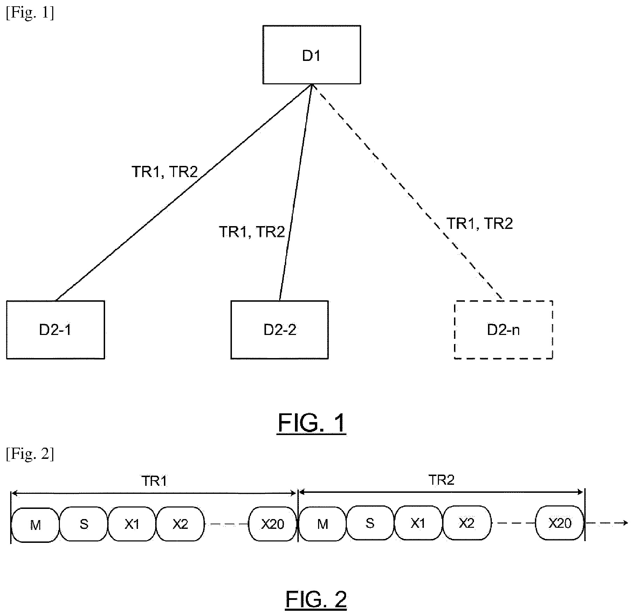

L'invention concerne un procédé de communication selon un protocole TDMA (accès multiple par répartition dans le temps) entre un dispositif maître et au moins un dispositif esclave. Dans cet exemple, en référence à la [Fig.1], il est représenté un unique dispositif maître D1 communiquant avec n dispositifs esclave D2 (D2-1, D2-2, D2-n). Par la suite, par souci de clarté et de concision, il sera fait référence de manière générale à un dispositif esclave D2. Il est principalement présenté dans cet exemple une communication du dispositif maître DA vers un dispositif esclave D2 mais il existe également une communication des dispositifs esclave D2 vers le dispositif maître D1.

De manière préférée, un dispositif maître D1 et un dispositif esclave D2 sont des dispositifs électroniques. Dans cet exemple, les dispositifs D1, D2 sont utilisés dans un contexte aéronautique, en particulier, pour les réseaux de capteurs et actionneurs dans un aéronef.

De manière connue, selon le protocole TDMA, des trames TR1, TR2 sont transmises sur réseau, chaque trame TR1, TR2 comportant des intervalles de temps (slots en langue anglaise) destinés à l'émission de données du dispositif maître D1 et à l'émission de données des dispositifs esclave prédéterminés D2. Dans cet exemple, chaque trame TR1, TR2 possède une durée de l'ordre de 1 ms.

Le dispositif maître D1 comporte une horloge maître HORL1 qui cadence l'émission des données dans une trame TR1, TR2. De manière analogue, chaque dispositif esclave D2 comporte une horloge esclave HORL2 qui cadence la réception des données dans une trame TR1, TR2.

Comme illustré à la [Fig.2], chaque trame TR1, TR2 comporte un signal maître M, comportant des donnés du dispositif maître D1, émis par le dispositif maître D1 pour les dispositifs esclave D2, et un signal analogique de synchronisation S, émis par le dispositif maître D1 pour les dispositifs esclave D2. Chaque trame TR1, TR2 comporte en outre des intervalles de temps X1-X20 destinés à la transmission de données de chaque dispositif esclave D2 vers le dispositif maître D1.

Dans cet exemple de mise en œuvre, pour obtenir une synchronisation précise, la distance entre le dispositif maître D1 et le dispositif esclave D2 ne dépasse pas 30m et induit un retard maximal de l'ordre de 150ns.

Selon l'invention, le signal analogique de synchronisation S comprend une portion de réglage d'amplitude S1 qui se présente sous la forme d'une onde sinusoïdale ayant une amplitude constante pendant un nombre d'impulsions prédéterminés, et une portion de synchronisation optimisée S2 qui se présente sous la forme d'une modulation d'amplitude de forme triangulaire de l'onde sinusoïdale de manière à déterminer un instant de référence TOP.

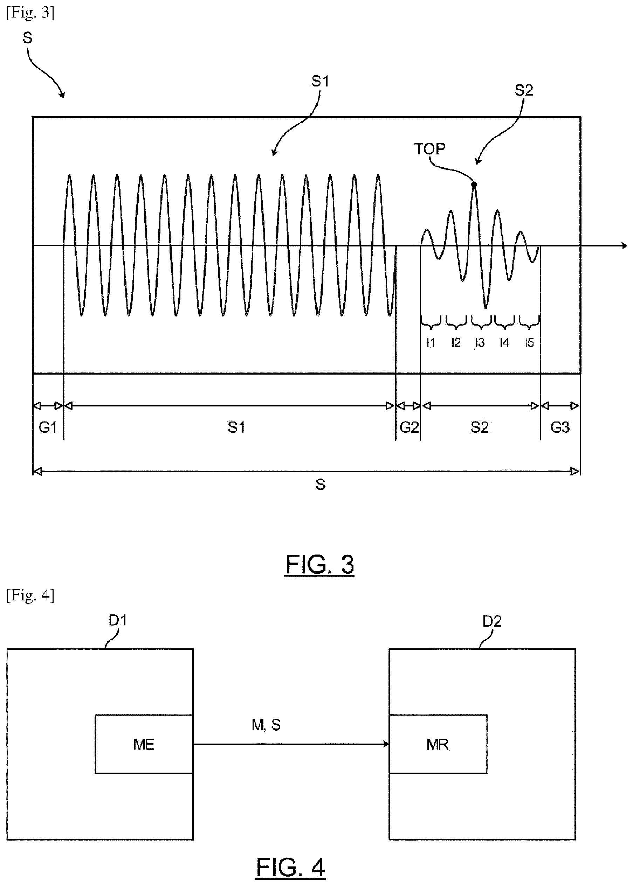

Conformément à l'invention, comme illustré à la [Fig.3], le signal analogique de synchronisation S comporte une portion de réglage d'amplitude S1 et une portion de synchronisation optimisée S2 qui vont être présentées en détails. De manière avantageuse, un tel signal analogique de synchronisation S permet de régler de manière affinée le gain du dispositif esclave D2, de synchroniser les horloges maître HORL1 et esclave HORL2 et enfin d'horodater les trames TR1, TR2 de manière très précise.

Dans cet exemple, comme illustré à la [Fig.3], le signal analogique de synchronisation S comporte un premier intervalle de garde G1, par exemple de l'ordre de 3 microsecondes, la portion de réglage d'amplitude S1, un deuxième intervalle de garde G2, par exemple de l'ordre de 1 microseconde, la portion de synchronisation optimisée S2 et un troisième intervalle de garde G3. Dans cet exemple, le signal analogique de synchronisation S possède une durée de l'ordre de 45 microsecondes.

Toujours en référence à la [Fig.3], la portion de réglage d'amplitude S1 se présente sous la forme d'une onde sinusoïdale, de préférence, pure. Par pure, on entend que l'onde sinusoïdale est constituée uniquement de sinus. Dans cet exemple, la portion de réglage d'amplitude S1 possède une durée de l'ordre de 35 microsecondes.

L'onde sinusoïdale a une amplitude constante pendant un nombre de cycle prédéterminés. Dans cet exemple de mise en œuvre, l'onde sinusoïdale possède une amplitude comprise entre -1V et + 1V mais il va de soi qu'elle pourrait être différente. De même, l'onde sinusoïdale comporte 35 impulsions (appelées également cycles), chaque impulsion se présentant sous la forme d'un sinus de période de 1 microseconde. Chaque impulsion est ainsi identique. Un nombre d'impulsions compris entre 16 et 40 est préféré étant donné qu'il permet d'assurer un bon compromis entre vitesse et précision pour régler le gain d'un dispositif esclave D2 comme cela sera présenté par la suite.

La fréquence de l'onde sinusoïdale dépend de la fréquence de l'horloge maître HORL1. Dans cet exemple, la fréquence de l'onde sinusoïdale est égale à la fréquence de l'horloge maître HORL1.

Toujours en référence à la [Fig.3], la portion de synchronisation optimisée S2 se présente sous la forme d'une modulation d'amplitude de forme triangulaire de l'onde sinusoïdale, c'est-à-dire, celle de la portion de réglage d'amplitude S1 de manière à déterminer un instant de référence TOP. Dans cet exemple, la portion de synchronisation optimisée S2 possède une durée de l'ordre de 5 microsecondes.

La portion de synchronisation optimisée S2 possède des impulsions ayant la même fréquence que celle de la portion de réglage d'amplitude S1 (période de 1 microseconde).

La portion de synchronisation optimisée S2 n'a pas une amplitude constante mais une amplitude variable. Une modulation d'amplitude de forme triangulaire permet de définir une phase croissante et une phase décroissante et un instant de référence TOP à la transition entre la phase croissante et la phase décroissante. Lors de la réception, la transition entre les phases est détectable de manière rapide et précise, ce qui permet de déterminer un instant de référence TOP qui est très précis. On peut ainsi synchroniser des horloges HORL1, HORL 2 et horodater de manière précise des intervalles de temps d'une trame TR1, TR2.

De préférence, la portion de synchronisation optimisée S2 comporte un nombre impair d'impulsions dont l'impulsion centrale possède l'amplitude la plus élevée afin de déterminer l'instant de référence TOP. Dans cet exemple, la portion de synchronisation optimisée S2 comporte cinq impulsions I1-I5 qui sont symétriques : les impulsions I1, I5 possèdent une amplitude faible -0.3V/+0.3V, les impulsions I2, I4 possèdent une amplitude moyenne -0.7V/+0.7V tandis que l'impulsion centrale I3 possède une amplitude élevée -1V/+1V. Chaque impulsion I1-I5 possède une même période de 1 microseconde. L'instant de référence TOP est ici défini lorsque l'impulsion centrale I3 a une amplitude +1V.

L'instant de référence TOP est déterminé pour chaque trame TR1, TR2, c'est-à-dire toutes les 1ms, et possède une précision très élevée inférieure à 1 microseconde (période d'une impulsion).

L'instant de référence TOP permet de définir le début de la période à laquelle des donnés X1-X20 sont envoyées respectivement par chacun des dispositifs esclaves D2-1 à D2-20 au dispositif maître D1. Grâce à l'invention, cet instant de référence TOP est connu avec une grande précision. De plus, cela permet de déterminer précisément la période de temps entre deux instants de référence TOP, qui est de l'ordre de 1 ms, afin d'en déduire la fréquence de l'horloge maître HORL1 et de corriger éventuellement la fréquence de l'horloge esclave HORL2.

Il va dorénavant être présenté l'émission et la réception d'un signal analogique de synchronisation S.

En référence à la [Fig.4], il est représenté de manière schématique l'émission d'un signal maître M et d'un signal analogique de synchronisation S d'un dispositif maître D1 à un dispositif esclave D2. A cet effet, le dispositif maître D1 comporte un module d'émission ME pour émettre les signaux M, S tandis que le dispositif d'esclavage D2 comporte un module de réception MR pour les recevoir.

Comme cela a été présenté précédemment, la communication est bidirectionnelle et chaque dispositif esclave D2 comporte un module d'émission (non représenté) pour émettre les données X1-X20. De manière analogue, le dispositif maître D1 comporte également un module de réception des données X1-X20 (non représenté).

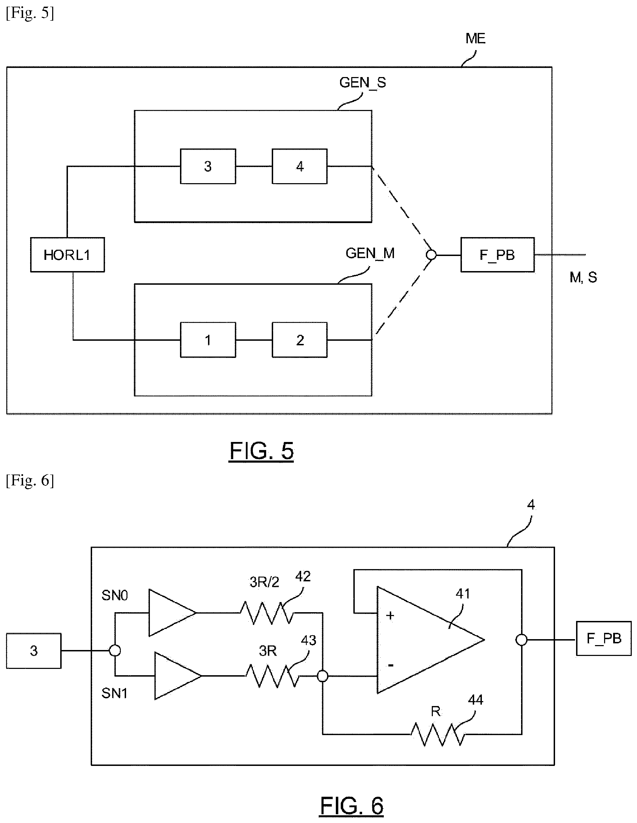

De manière générale, comme illustré à la [Fig.5], le module d'émission ME comporte un générateur GEN_M du signal maître M et un générateur GEN_S du signal analogique de synchronisation S. Le module d'émission ME comporte une horloge maître HORL1, reliée aux générateurs GEN_M, GEN_S, qui contrôle la cadence de génération du signal maître M et du signal analogique de synchronisation S. Le module d'émission ME comporte en outre un filtre passe-bas F_PB qui filtre les signaux M, S avant leur transmission aux dispositifs esclave D2.

Le générateur GEN_M de signal maître M comporte un organe de traitement du signal numérique 1 et un convertisseur analogique-numérique 2 pour former le signal maître M. Une telle génération est connue de l'art antérieur et ne sera pas présentée plus en détails.

Toujours en référence à la [Fig.5], le générateur GEN_S de signal analogique de synchronisation S comporte un organe de génération d'impulsions 3 et un organe de traitement 4 desdites impulsions pour former les différentes portions S1, S2 du signal analogique de synchronisation S.

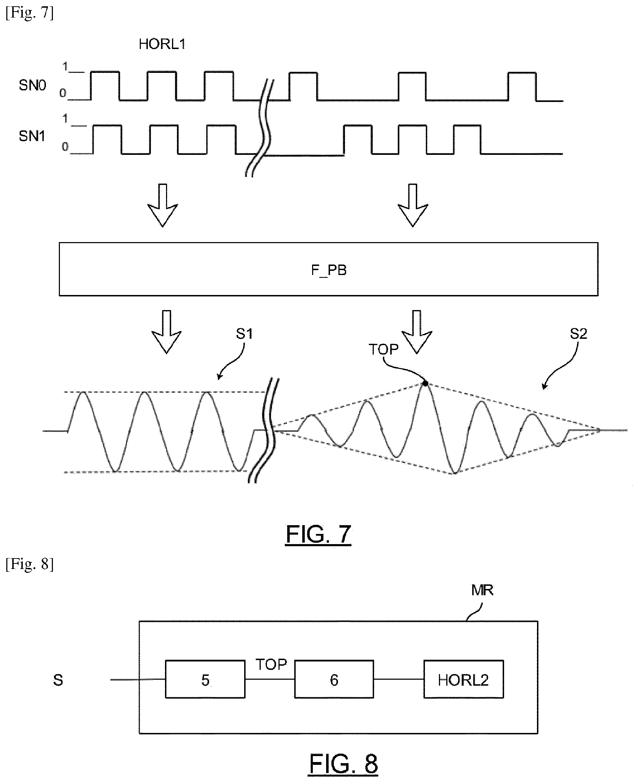

De manière détaillée, comme illustré à la [Fig.7], l'organe de génération d'impulsions 3 forme deux sorties numériques SN0, SN1 qui sont transmises à l'organe de traitement 4. La fréquence des sorties numériques SN0, SN1 dépend de l'horloge maître HORL1. Les sorties numériques SN0, SN1 sont binaires et codées sur quatre positions et converties en une tension analogique sur quatre niveaux par l'organe de traitement 4 qui réalise un montage additionneur pondéré, en particulier, au moyen d'un amplificateur opérationnel 41 et un ensemble de résistances 42, 43, 44 comme illustré à la [Fig.6]. L'organe de traitement 4 permet de réaliser une modulation en amplitude de forme triangulaire de la portion de synchronisation optimisée S2 au moyen d'une chaine numérique peu complexe.

La [Fig.6] ne représente que la génération de la partie positive des impulsions. Pour générer la partie négative des impulsions dans un mode bipolaire, deux autres sorties numériques sont de préférence prévues.

De manière avantageuse, comme illustré à la [Fig.7], le séquencement des sorties numériques SN0, SN1 permet de générer la totalité des impulsions, c'est-à-dire, aussi bien celles de la portion de réglage d'amplitude S1 que celle de la portion de synchronisation optimisée S2.

Comme illustré à la [Fig.7], après application d'un filtre passe-bas F_PB, on obtient la portion de réglage d'amplitude S1 comportant des impulsions de même amplitude et la portion de synchronisation optimisée S2 comportant des impulsions croissantes jusqu'à l'instant de référence TOP puis des impulsions décroissantes.

De manière avantageuse, l'instant de référence TOP est généré directement à partir de l'horloge maître HORL1 de façon numérique puis filtré pour ne garder que la fréquence fondamentale du signal. Le signal analogique de synchronisation S est ainsi fortement corrélé à l'horloge maître HORL1. L'horloge maître HORL1 peut ainsi être aisément déterminée par un dispositif esclave D2.

Le module d'émission ME possède une structure peu complexe, ce qui permet de réduire son coût et facilite son adoption.

Comme illustré à la [Fig.8], le module de réception MR comporte un système d'extraction 5 des instants de référence TOP et un système de réglage 6 d'une horloge esclave HORL2 à partir desdits instants de référence TOP.

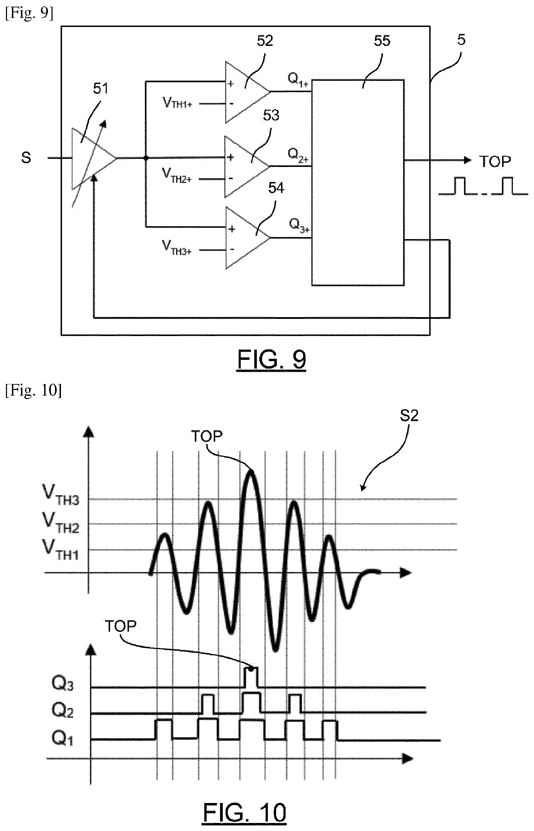

Comme illustré à la [Fig.9], le système d'extraction 5 comporte un amplificateur à gain programmable 51 qui est configuré pour régler son paramètre de gain en fonction de l'amplitude de la portion de réglage d'amplitude S1 du signal analogique de synchronisation S. Autrement dit, sa fonction est de normaliser l'amplitude de la portion de réglage d'amplitude S1 à une valeur de référence prédéterminée.

Toujours en référence à la [Fig.9], le système d'extraction 5 comporte en outre des comparateurs de tension 52, 53, 54 qui sont configurés pour convertir l'amplitude du signal analogique de synchronisation S en signaux numériques Q1, Q2, Q3. Il va de soi que le nombre de comparateurs pourrait être différent. Les comparateurs de tension 52, 53, 54 sont configurés pour comparer l'amplitude du signal analogique de synchronisation S, en particulier la portion de réglage d'amplitude S1, à des tensions prédéterminées VTH1+, VTH2+, VTH3+. Comme illustré à la [Fig.10], les tensions prédéterminées VTH1+, VTH2+, VTH3+ sont croissantes (seuils de déclenchement graduellement réglés de 0 à 100% de la valeur maximale). On obtient avantageusement des signaux numériques codés numériquement sur 2 bits. Le module de réception MR permet ainsi de déterminer de manière précise l'amplitude du signal analogique de synchronisation S pour régler l'amplificateur à gain programmable 51. De manière avantageuse, les nombreuses impulsions à amplitude constante de la portion de réglage d'amplitude S1 permettent de régler le gain de manière rapide et précise.

Les comparateurs de tension 52, 53, 54 sont également configurés pour comparer l'amplitude de la portion de synchronisation optimisée S2 aux tensions prédéterminées V_{TH1+}, V_{TH2+}, V_{TH3+} de manière à détecter une phase d'amplitude croissante et une phase d'amplitude décroissante pour en déduire l'instant de référence TOP qui est situé à la transition entre les deux phases.

De manière avantageuse, comme illustré à la [Fig.10], suite aux étapes de comparaison, la portion de synchronisation optimisée S2 est convertie en une pluralité de signaux numériques Q1, Q2, Q3 qui mettent en exergue l'instant de référence TOP. De manière avantageuse, même si un des signaux numériques Q1, Q2, Q3 est manquant, on peut toujours déterminer l'instant de référence TOP.

De manière préférée, les signaux numériques Q1, Q2, Q3 sont échantillonnés de manière numérique à une fréquence élevée, par exemple 4 à 16 fois la fréquence de base, pour déceler les faibles variations de largeur dues à la forme sinusoïdale. Cela permet de détecter très précisément la phase d'amplitude croissante et la phase d'amplitude décroissante et, par voie de conséquence, l'instant de référence TOP situé à la transition.

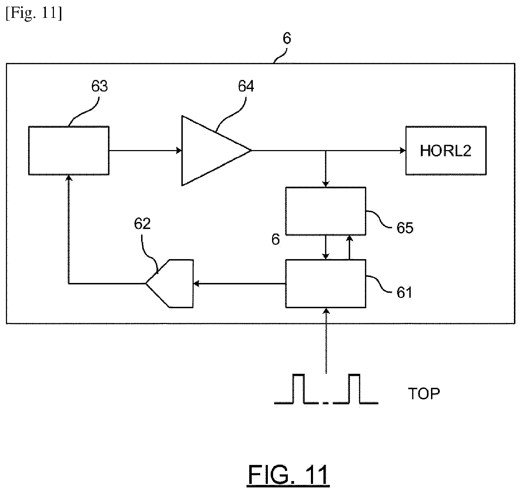

En référence à la [Fig.9], le système d'extraction 5 comporte en outre un organe de traitement numérique 55 configuré pour extraire l'instant de référence TOP des signaux numériques Q1, Q2, Q3. Les instants de référence TOP successifs, émis tous les 1ms, sont transmis au système de réglage 6 d'une horloge esclave HORL2 illustré à la [Fig.11].

Un tel système de réglage 6 est connu en soi de l'homme du métier. Dans cet exemple, le système de réglage 6 comporte un automate de contrôle de l'asservissement et de la mesure de la fréquence 61 utilisant la séquence d'instants de référence TOP comme référence temporelle et un oscillateur commandé en tension 63, appelé aussi « Voltage Controled Oscillator » VCO, relié à l'automate de contrôle de l'asservissement et de la mesure de la fréquence 61 par un convertisseur analogique-numérique 62. L'oscillateur commandé en tension 63 est relié à un espace tampon (buffer) 64 pour former l'horloge esclave HORL2.

Dans cet exemple, le système de réglage 6 comporte en outre un compteur numérique 65 qui compte le nombre d'impulsions de l'horloge esclave HORL2 dans un intervalle de 1ms afin de déterminer sa fréquence, l'automate de contrôle de l'asservissement et de la mesure de la fréquence 61 permet l'asservissement de l'horloge esclave HORL2 par rapport à l'horloge du maitre HORL1. Ainsi, on détermine l'horloge maître HORL1 à partir de la séquence des instants de référence TOP, datés tous les 1ms, pour corriger une éventuelle dérive de la fréquence de l'horloge esclave HORL2.

Le système de réglage 6 est indépendant du système d'extraction 5, ce qui permet de manière avantageuse de réduire la consommation électrique globale en mettant en veille les parties numériques non utilisées en dehors du créneau temporel assigné au dispositif esclave D2. En outre, cela permet de réduite les latences variables et aléatoires liées à la numérisation des signaux analogiques.

Ainsi, le module de réception MR permet de manière avantageuse de régler l'amplitude (le gain) et de synchroniser l'horloge esclave HORL2 avec l'horloge maître HORL1 suite à la réception d'un signal analogique de synchronisation S.

En référence dorénavant à la [Fig.4], un dispositif maître D1 émet des signaux M, S, grâce à son module d'émission ME, vers un dispositif esclave D2 qui grâce à son module de réception MR, permet de régler l'amplitude (le gain) et de synchroniser l'horloge esclave HORL2 avec l'horloge maître HORL1. Etant donné que l'horloge esclave HORL2 est asservie à l'horloge maître HORL1, cela améliore les performances de la démodulation des données des trames TR1, TR2. De plus, l'instant de référence TOP donne une référence temporelle à la microseconde permettant aux dispositifs esclave D2 de réaliser une datation précise des paquets de données X1-X20 relativement à cet instant de référence TOP. Le dispositif maître D1 peut ainsi reconstituer l'horodatage précis des paquets de données en se basant sur l'état de son horloge maître HORL1 au précédent instant de référence TOP et à la datation relative fournie par le dispositif esclave D2.

De manière avantageuse, on obtient une précision élevée en fréquence (de l'ordre +/-100ppm) par une compensation régulière des dérives même à des températures élevées. Cela est particulièrement avantageux par comparaison à des composants classiques à quartz ou à onde de surfaces.

Enfin, étant donné que la synchronisation selon l'invention est performante, on peut retirer le préambule de synchronisation habituelle des signaux M et X1-X20 de chaque trame numérique TR1, TR2 et ainsi augmenter la bande passante utile.

## Revendications

1. Procédé de communication selon un protocole d'accès multiple par répartition dans le temps ou en anglais Time Division Multiple Acces, TDMA, entre un dispositif maître (D1) et
au moins un dispositif esclave (D2) au cours duquel une pluralité de trames (TR1, TR2) sont transmises entre le dispositif maître (D1) et le dispositif esclave (D2), chaque trame (TR1, TR2) étant partitionnée en une pluralité d'intervalles de temps, au moins un intervalle de temps comprenant un signal analogique de synchronisation (S), émis par le dispositif maître (D1) vers le dispositif esclave (D2), le signal analogique de synchronisation (S) étant **caractérisé en ce qu'**il comprend :
- une portion de réglage d'amplitude (S1) qui se présente sous la forme d'une onde sinusoïdale ayant une amplitude constante pendant un nombre d'impulsions prédéterminés, et
- une portion de synchronisation optimisée (S2) qui se présente sous la forme d'une modulation d'amplitude de forme triangulaire de l'onde sinusoïdale de manière à déterminer un instant de référence (TOP).

2. Procédé de communication selon la revendication 1, dans lequel la modulation d'amplitude de forme triangulaire de l'onde sinusoïdale comporte une phase d'amplitude croissante et une phase d'amplitude décroissante, l'instant de référence (TOP) étant déterminé à la transition entre la phase d'amplitude croissante et la phase d'amplitude décroissante.

3. Procédé de communication selon l'une des revendications 1 à 2, dans lequel la modulation d'amplitude de forme triangulaire de l'onde sinusoïdale comporte un nombre impair d'impulsions, l'instant de référence (TOP) étant déterminé au cours d'une impulsion centrale.

4. Procédé de communication selon l'une des revendications 1 à 3, dans lequel l'onde sinusoïdale est pure.

5. Procédé de communication selon l'une des revendications 1 à 4, dans lequel l'onde sinusoïdale possède une période comprise entre 0,1 et 10 microsecondes.

6. Procédé de communication selon l'une des revendications 1 à 5, dans lequel la portion de réglage d'amplitude (S1) possède un nombre d'impulsions supérieur à 16 et, de préférence, inférieur à 40.

7. Module d'émission (ME) de données d'un dispositif maître (D1) à au moins un dispositif esclave (D2) dans une trame selon un protocole d'accès multiple par répartition dans le temps ou en anglais Time Division Multiple Acces, TDMA, chaque trame (TR1, TR2) étant partitionnée en une pluralité d'intervalles de temps, au moins un intervalle de temps comprenant un signal analogique de synchronisation (S), le signal analogique de synchronisation (S) étant **caractérisé en ce qu'**il comprend une portion de réglage d'amplitude (S1) qui se présente sous la forme d'une onde sinusoïdale ayant une amplitude constante pendant un nombre d'impulsions prédéterminés, et une portion de synchronisation optimisée (S2) qui se présente sous la forme d'une modulation d'amplitude de forme triangulaire de l'onde sinusoïdale de manière à déterminer un instant de référence (TOP), le module d'émission (ME) comprenant un générateur (GEN_M) de signal maître (M), un générateur (GEN_S) de signal analogique de synchronisation (S) et une horloge maître (HORL1), reliée aux deux générateurs (GEN_M, GEN_S), qui contrôle la cadence de génération du signal maître (M) et du signal analogique de synchronisation (S).

8. Module d'émission (ME) selon la revendication 7, dans lequel le générateur (GEN_S) de signal analogique de synchronisation (S) comporte un organe de génération d'impulsions (3) et un organe de traitement (4) desdites impulsions pour former les différentes portions (S1, S2) du signal analogique de synchronisation (S), l'organe de traitement (4) comportant un montage additionneur pondéré de manière à réaliser une modulation en amplitude de forme triangulaire de la portion de synchronisation optimisée (S2).

9. Module de réception (MR) de données, émises par un dispositif maître (D1) à au moins un dispositif esclave (D2), dans une trame selon un protocole d'accès multiple par répartition dans le temps ou en anglais Time Division Multiple Acces, TDMA, chaque trame (TR1, TR2) étant partitionnée en une pluralité d'intervalles de temps, au moins un intervalle de temps comprenant un signal analogique de synchronisation (S), le signal analogique de synchronisation (S) étant **caractérisé en ce qu'**il comprend une portion de réglage d'amplitude (S1) qui se présente sous la forme d'une onde sinusoïdale ayant une amplitude constante pendant un nombre d'impulsions prédéterminés, et une portion de synchronisation optimisée (S2) qui se présente sous la forme d'une modulation d'amplitude de forme triangulaire de l'onde sinusoïdale de manière à déterminer un instant de référence (TOP), le module de réception (MR) comprenant un système d'extraction (5) des instant de référence (TOP) et un système de réglage (6) d'une horloge esclave (HORL2) à partir desdits instants de référence (TOP).

10. Module de réception (MR) selon la revendication 9, dans lequel le système d'extraction (5) comporte un amplificateur à gain programmable (51) et des comparateurs de tensions (52, 53, 54) configurés pour déterminer de manière précise l'amplitude du signal analogique de synchronisation (S) et en déduire un réglage de l'amplificateur à gain programmable (51).

11. Ensemble d'un module d'émission (ME) selon l'une des revendications 7 à 8 et d'un module de réception (MR) selon l'une des revendications 9 à 10.

## Patentansprüche

1. Kommunikationsverfahren gemäß einem Zeitmultiplex-Mehrfachzugriffsprotokoll oder auf Englisch Time Division Multiple Access, TDMA, zwischen einer Master-Vorrichtung (D1) und mindestens einer Slave-Vorrichtung (D2), bei dem eine Vielzahl von Frames (TR1, TR2) zwischen der Master-Vorrichtung (D1) und der Slave-Vorrichtung (D2) übertragen werden, wobei jeder Frame (TR1, TR2) in eine Vielzahl von Zeitintervallen partitioniert ist, wobei mindestens ein Zeitintervall ein analoges Synchronisationssignal (S) umfasst, das von der Master-Vorrichtung (D1) an die Slave-Vorrichtung (D2) gesendet wird, wobei das analoge Synchronisationssignal (S) **dadurch gekennzeichnet ist, dass** es umfasst:
- einen Amplitudeneinstellabschnitt (S1), der in Form einer Sinuswelle mit konstanter Amplitude während einer vorbestimmten Impulsanzahl vorliegt, und
- einen optimierten Synchronisationsabschnitt (S2), der in Form einer dreieckförmigen Amplitudenmodulation der Sinuswelle vorliegt, um einen Referenzzeitpunkt (TOP) zu bestimmen.

2. Kommunikationsverfahren nach Anspruch 1, wobei die dreieckförmige Amplitudenmodulation der Sinuswelle eine Phase mit ansteigender Amplitude und eine Phase mit abfallender Amplitude aufweist, wobei der Referenzzeitpunkt (TOP) am Übergang zwischen der Phase mit ansteigender Amplitude und der Phase mit abfallender Amplitude bestimmt wird.

3. Kommunikationsverfahren nach einem der Ansprüche 1 bis 2, wobei die dreieckförmige Amplitudenmodulation der Sinuswelle eine ungerade Impulsanzahl aufweist, wobei der Referenzzeitpunkt (TOP) während eines mittleren Impulses bestimmt wird.

4. Kommunikationsverfahren nach einem der Ansprüche 1 bis 3, wobei die Sinuswelle rein ist.

5. Kommunikationsverfahren nach einem der Ansprüche 1 bis 4, wobei die Sinuswelle eine Periode zwischen 0,1 und 10 Mikrosekunden besitzt.

6. Kommunikationsverfahren nach einem der Ansprüche 1 bis 5, wobei der Amplitudeneinstellabschnitt (S1) eine Impulsanzahl von mehr als 16 und vorzugsweise weniger als 40 aufweist.

7. Modul (ME) zum Senden von Daten von einer Master-Vorrichtung (D1) an mindestens eine Slave-Vorrichtung (D2) in einem Frame gemäß einem Zeitmultiplex-Zugriffsprotokoll oder auf Englisch Time Division Multiple Access, TDMA, wobei jeder Frame (TR1, TR2) in eine Vielzahl von Zeitintervallen partitioniert ist, wobei mindestens ein Zeitintervall ein analoges Synchronisationssignal (S) umfasst, wobei das analoge Synchronisationssignal (S) **dadurch gekennzeichnet ist, dass** es einen Amplitudeneinstellabschnitt (S1) in Form einer Sinuswelle mit konstanter Amplitude während einer vorbestimmten Impulsanzahl umfasst, und einen optimierten Synchronisationsabschnitt (S2), der in Form einer dreieckförmigen Amplitudenmodulation der Sinuswelle vorliegt, um einen Referenzzeitpunkt (TOP) zu bestimmen, wobei das Sendemodul (ME) einen Generator (GEN_M) für das Master-Signal (M), einen Generator (GEN_S) für das analoge Synchronisationssignal (S) und einen mit den beiden Generatoren (GEN_M, GEN_S) verbundenen Master-Taktgeber (HORL1) umfasst, der den Erzeugungsrhythmus des Master-Signals (M) und des analogen Synchronisationssignals (S) steuert.

8. Sendemodul (ME) nach Anspruch 7, wobei der Generator (GEN_S) für das analoge Synchronisationssignal (S) eine Impulserzeugungseinrichtung (3) und eine Verarbeitungseinrichtung (4) für die Impulse umfasst, um die verschiedenen Abschnitte (S1, S2) des analogen Synchronisationssignals (S) zu bilden, wobei die Verarbeitungseinrichtung (4) eine Addiererschaltung umfasst, die derart gewichtet ist, dass eine dreieckförmige Amplitudenmodulation des optimierten Synchronisationsabschnitts (S2) durchgeführt wird.

9. Empfangsmodul (MR) für Daten, die von einer Master-Vorrichtung (D1) an mindestens eine Slave-Vorrichtung (D2) in einem Frame gemäß einem Zeitmultiplex-Zugriffsprotokoll oder auf Englisch Time Division Multiple Access, TDMA, gesendet werden, wobei jeder Frame (TR1, TR2) in eine Vielzahl von Zeitintervallen partitioniert ist, wobei mindestens ein Zeitintervall ein analoges Synchronisationssignal (S) umfasst, wobei das analoge Synchronisationssignal (S) **dadurch gekennzeichnet ist, dass** es einen Amplitudeneinstellabschnitt (S1) in Form einer Sinuswelle mit konstanter Amplitude während einer vorbestimmten Impulsanzahl und einen optimierten Synchronisationsabschnitt (S2) in Form einer dreieckförmigen Amplitudenmodulation der Sinuswelle umfasst, um einen Referenzzeitpunkt (TOP) zu bestimmen, wobei das Empfangsmodul (MR) ein System (5) zum Extrahieren der Referenzzeitpunkte (TOP) und ein System (6) zum Einstellen eines Slave-Taktgebers (HORL2) anhand der Referenzzeitpunkte (TOP) umfasst.

10. Empfangsmodul (MR) nach Anspruch 9, wobei das Extraktionssystem (5) einen Verstärker mit programmierbarem Gain (51) und Spannungskomparatoren (52, 53, 54) umfasst, die ausgelegt sind, um die Amplitude des analogen Synchronisationssignals (S) genau zu bestimmen und daraus eine Einstellung des Verstärkers mit programmierbarem Gain (51) abzuleiten.

11. Anordnung aus einem Sendemodul (ME) nach einem der Ansprüche 7 bis 8 und einem Empfangsmodul (MR) nach einem der Ansprüche 9 bis 10.

## Claims

1. A method of communication according to a multiple access protocol by time distribution or in English Time Division Multiple Acces TDMA between a master device (D1) and at least one slave device (D2) during which a plurality of frames (TR1, TR2) are transmitted between the master device (D1) and the slave device (D2), each frame (TR1, TR2) being partitioned into a plurality of time slots, at least one time slot comprising an analog synchronization signal (S), transmitted by the master device (D1) to the slave device (D2), the analog synchronization signal (S) being **characterized in that** it comprises:
• an amplitude setting portion (S1) which is in the form of a sine wave having a constant amplitude during a predetermined number of pulses, and
• an optimized synchronization portion (S2) which is in the form of a triangular-shaped amplitude modulation of the sine wave so as to determine a reference time instant (TOP).

2. The method of communication according to claim 1, wherein the triangular-shaped amplitude modulation of the sine wave comprises an increasing amplitude phase and a decreasing amplitude phase, the reference time instant (TOP) being determined at the transition between the increasing amplitude phase and the decreasing amplitude phase.

3. The method of communication according to one of claims 1 to 2, wherein the triangular-shaped amplitude modulation of the sine wave comprises an odd number of pulses, the reference time instant (TOP) being determined during a central pulse.

4. The method of communication according to one of claims 1 to 3, wherein the sine wave is pure.

5. The method of communication according to one of claims 1 to 4, wherein the sine wave has a period between 0.1 and 10 microseconds.

6. The method of communication according to one of claims 1 to 5, wherein the amplitude setting portion (S1) has a number of pulses greater than 16 and preferably less than 40.

7. A transmission module (ME) for transmitting data from a master device (D1) to at least one slave device (D2) in a frame according to a multiple access protocol by time distribution or in English Time Division Multiple Access TDMA, each frame (TR1, TR2) being partitioned into a plurality of time slots, at least one time slot comprising an analog synchronization signal (S), the analog synchronization signal (S) being **characterized in that** it comprises an amplitude setting portion (S1) which is in the form of a sine wave having a constant amplitude during a predetermined number of pulses, and an optimized synchronization portion (S2) which is in the form of a triangular-shaped amplitude modulation of the sine wave so as to determine a reference time instant (TOP), the transmission module (ME) comprising a generator (GEN_M) of the master signal (M), a generator (GEN_S) of the analog synchronization signal (S) and a master clock (HORL1), connected to the two generators (GEN_M, GEN_S), which controls the generation rate of the master signal (M) and the analog synchronization signal (S).

8. The transmission module (ME) according to claim 7, in which the generator (GEN_S) of the analog synchronization signal (S) comprises a pulse generation member (3) and a processing member (4) for processing said pulses in order to form the different portions (S1, S2) of the analog synchronization signal (S), the processing member (4) comprising a weighted adder circuit so as to carry out a triangular-shaped amplitude modulation of the optimized synchronization portion (S2).

9. A reception module (MR) for receiving data, transmitted by a master device (D1) to at least one slave device (D2), in a frame according to a multiple access protocol by time distribution or in English Time Division Multiple Acces TDMA, each frame (TR1, TR2) being partitioned into a plurality of time slots, at least one time slot comprising an analog synchronization signal (S), the analog synchronization signal (S) being **characterized in that** it comprises an amplitude setting portion (S1) which is in the form of a sine wave having a constant amplitude during a predetermined number of pulses and an optimized synchronization portion (S2) in the form of a triangular-shaped amplitude modulation of the sine wave so as to determine a reference time instant (TOP), the reception module (MR) comprising an extraction system (5) for extracting the reference time instants (TOP) and a setting system (6) for setting a slave clock (HORL2) from said reference time instants (TOP).

10. The reception module (MR) according to claim 9, wherein the extraction system (5) comprises a programmable gain amplifier (51) and voltage comparators (52, 53, 54) configured to accurately determine the amplitude of the analog synchronization signal (S) and to deduce a setting of the programmable gain amplifier (51) therefrom.

11. An assembly of a transmission module (ME) according to one of claims 7 to 8 and a reception module (MR) according to one of claims 9 to 10
